(19) Europäisches Patentamt / European Patent Office / Office européen des brevets

(11) **EP 4 645 496 A1**

(12) **EUROPEAN PATENT APPLICATION**

(43) Date of publication:
 **05.11.2025   Bulletin 2025/45**

(21) Application number: **24217038.9**

(22) Date of filing: **03.12.2024**

(51) International Patent Classification (IPC):
 *H01M 10/0525* (2010.01)     *H01M 10/0564* (2010.01)
 *H01M 50/411* (2021.01)      *H01M 50/417* (2021.01)
 *H01M 50/42* (2021.01)       *H01M 50/434* (2021.01)
 *H01M 50/446* (2021.01)      *H01M 50/449* (2021.01)
 *H01M 50/491* (2021.01)

(52) Cooperative Patent Classification (CPC):
 H01M 50/449; H01M 10/0525; H01M 10/0564;
 H01M 50/411; H01M 50/417; H01M 50/42;
 H01M 50/434; H01M 50/446; H01M 50/491

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority:  **30.04.2024   CN 202410551169
          17.05.2024   CN 202410622569**

(71) Applicant: **Huizhou EVE Power Co., Ltd
 Tonghu Town, Zhongkai High-tech District
 Huizhou, Guangdong 516000 (CN)**

(72) Inventors:
 • **LIU, Fanfen**
  **Huizhou, Guangdong, 516000 (CN)**
 • **LI, Xingyu**
  **Huizhou, Guangdong, 516000 (CN)**
 • **ZHU, Zhiyuan**
  **Huizhou, Guangdong, 516000 (CN)**
 • **ZHANG, Huan**
  **Huizhou, Guangdong, 516000 (CN)**
 • **YUAN, Dingding**
  **Huizhou, Guangdong, 516000 (CN)**

(74) Representative: **Herrero & Asociados, S.L.
 Edificio Aqua - Agustín de Foxá, 4-10
 28036 Madrid (ES)**

(54) **COMPOSITE DIAPHRAGM AND LITHIUM-ION BATTERY**

(57)     A composite diaphragm and a lithium-ion battery. The composite diaphragm includes a porous substrate and a porous active layer. The porous active layer is arranged on at least one surface of the porous substrate; the porous active layer includes a base coating and a non-binder polymer C embedded in the base coating; the base coating includes inorganic particles A and a binder polymer B; D50 of the non-binder polymer C is greater than a thickness of the base coating; a tortuosity of the composite diaphragm $T = \sqrt{\sigma_1/\sigma_2 \times P}$, where $\sigma_1$ is an ionic conductivity of an electrolyte, $\sigma_2$ is an ionic conductivity of the composite diaphragm, and P is a porosity of the composite diaphragm; the tortuosity $T$ of the composite diaphragm is in a range of 1.1 to 1.7.

Processed by Luminess, 75001 PARIS (FR)

**Description**

**TECHNICAL FIELD**

The present disclosure relates to the technical field of batteries, and more specifically to a composite diaphragm and a lithium-ion battery.

**BACKGROUND**

The lithium-ion battery mainly includes a positive electrode, a negative electrode, a diaphragm, and an electrolyte, with the diaphragm playing a very important role. On the one hand, the diaphragm must have a certain chemical stability and mechanical strength, and must ensure a certain isolation property to prevent the positive electrode and the negative electrode from coming into contact and causing a short circuit. On the other hand, the diaphragm must have a certain permeability to allow ions to shuttle freely between the positive electrode and the negative electrode, thereby achieving the function of the lithium-ion battery.

In recent years, with the development of the lithium-ion battery industry, the market has increasingly high requirements for batteries, such as long cycle performance. At present, in the working process of the lithium-ion battery, the transmission efficiency of lithium ions on the diaphragm directly affects the cycle performance of the lithium-ion battery. If the diaphragm has defects that hinder the transmission of lithium ions, it will lead to an increase in the internal resistance of the battery and a significant attenuation of the cycle performance.

**SUMMARY OF THE DISCLOSURE**

In order to solve the above technical problems, an object of the present disclosure is to provide a composite diaphragm and a lithium-ion battery.

A composite diaphragm, including a porous substrate and a porous active layer;

the porous active layer is arranged on at least one surface of the porous substrate; the porous active layer includes a base coating and a non-binder polymer C embedded in the base coating; the base coating includes inorganic particles A and a binder polymer B;

D50 of the non-binder polymer C is greater than a thickness of the base coating;

a tortuosity of the composite diaphragm $T = \sqrt{\sigma_1/\sigma_2 \times P}$, where $\sigma_1$ is an ionic conductivity of an electrolyte, $\sigma_2$ is an ionic conductivity of the composite diaphragm, and P is a porosity of the composite diaphragm; the tortuosity T of the composite diaphragm is in a range of 1.1 to 1.7.

The ionic conductivity of the electrolyte is tested by reference to the test method for the ionic conductivity of electrolyte in section 4.7 of the industry standard SJT11723-2018; the ionic conductivity of the composite diaphragm is tested by reference to the test method for ionic conductivity of diaphragms in section 6.6.2 of China national standard GB/T 36363-2018; and the porosity is tested by reference to the test method for the porosity of diaphragms in section 6.5.5 of China national standard GB/T 36363-2018.

In the embodiments, the tortuosity T of the composite diaphragm is 1.1 to 1.7, which may be, for example, 1.1, 1.2, 1.3, 1.4, 1.5, 1.6, 1.7, but is not limited to the listed values, and other unlisted values within the numerical range are equally applicable.

In the embodiments, the D50 of the non-binder polymer C > the thickness of the base coating, such that the non-binder polymer C forms an obvious raised structure on the surface of the porous active layer, whereby a gap can be defined between the composite diaphragm and the electrode by means of the raised structure, which not only forms a good adhesion with the electrode, but also forms a gap between the diaphragm and the electrode. The tortuosity of the composite diaphragm refers to the ratio of the distance travelled by the lithium ions in the composite diaphragm to the thickness of the diaphragm, and the present disclosure limits the tortuosity of the composite diaphragm such that, on the one hand, the composite diaphragm has a good lithium-ion transport effect (lithium ion transmissibility), and on the other hand, the lithium-ion battery to which the composite diaphragm is applied has a good lithium ion transport kinetic characteristic and a good storage performance.

In the embodiments, since the actual distance travelled by lithium ions in the composite diaphragm cannot be measured directly in practice, the tortuosity of the composite diaphragm $T = \sqrt{\sigma_1/\sigma_2 \times P}$, where $\sigma_1$ is the ionic conductivity of the electrolyte, $\sigma_2$ is the ionic conductivity of the composite diaphragm, and P is the porosity of the composite diaphragm.

In some embodiments, the tortuosity T of the composite diaphragm is in a range of 1.1 to 1.5, which may be, for example, 1.1, 1.2, 1.3, 1.4, 1.5, but is not limited to the listed values, and other unlisted values within the numerical range are equally applicable.

In some embodiments, the $\sigma_1$ is in a range of 7.5 to 17.0 mS/cm, which may be, for example, 7.5 mS/cm, 8.5 mS/cm, 8.8 mS/cm, 9.0 mS/cm, 9.2 mS/cm, 9.5 mS/cm, 9.8 mS/cm, 10.0 mS/cm, 11.0 mS/cm, 12.0 mS/cm, 13.0 mS/cm, 14.0 mS/cm, 15.0 mS/cm, 16.0 mS/cm, 17.0 mS/cm, but is not limited to the listed values, and other unlisted values within the numerical range are equally applicable.

In some embodiments, the $\sigma_2$ is in a range of 0.5 to 2.6 mS/cm, which may be, for example, 0.5 mS/cm, 0.8 mS/cm, 1.1 mS/cm, 1.3 mS/cm, 1.5 mS/cm, 1.7 mS/cm, 2.0 mS/cm, 2.3 mS/cm, 2.6 mS/cm, but is not limited to the listed values, and other unlisted values within the numerical range are equally applicable.

In some embodiments, the P is in a range of 30% to 60%, which may be, for example, 30%, 35%, 40%, 45%, 50%, 55%, 60%, but is not limited to the listed values, and other unlisted values within the numerical range are equally applicable.

In some embodiments, the thickness of the base coating is in a range of 1.0 to 3.0 $\mu$m, which may be, for example, 1.0 $\mu$m, 1.5 $\mu$m, 2.0 $\mu$m, 2.5 $\mu$m, 3.0 $\mu$m, but is not limited to the listed values, and other unlisted values within the numerical range are equally applicable.

In the embodiments, the thickness of the base coating herein is 1.0-3.0 $\mu$m, which enables the composite diaphragm to have good heat-shrinkage resistance and further ensures that the composite diaphragm has a good degree of air permeability.

In some embodiments, the inorganic particles A in the base coating include at least one of $SrTiO_3$, $SnO_2$, $CeO_2$, $MgO$, $NiO$, $CaO$, $ZnO$, $ZrO_2$, $Y_2O_3$, $Al_2O_3$, $TiO_2$, $SiC$, $AlOOH$, and $SiO_2$.

In the embodiments, the inorganic particles A in the base coating include at least one of $SrTiO_3$, $SnO_2$, $CeO_2$, $MgO$, $NiO$, $CaO$, $ZnO$, $ZrO_2$, $Y_2O_3$, $Al_2O_3$, $TiO_2$, $SiC$, $AlOOH$, and $SiO_2$, such that the composite diaphragm achieves a suitable reinforcing structure.

In some embodiments, the content of the inorganic particles A in the base coating is not less than 85wt%, the inorganic particles A having a specific surface area of 2-10 $m^2$/g.

The content of the inorganic particles A is not less than 85 wt%, which may be, for example, 85 wt%, 87 wt%, 90 wt%, 92 wt%, 95 wt%, but is not limited to the listed values, and other unlisted values within the numerical range are equally applicable. The specific surface area of the inorganic particles A is 2-10 $m^2$/g, which may be, for example, 2 $m^2$/g, 3 $m^2$/g, 4 $m^2$/g, 5 $m^2$/g, 6 $m^2$/g, 7 $m^2$/g, 8 $m^2$/g, 9 $m^2$/g, 10 $m^2$/g, but is not limited to the listed values, and other unlisted values within the numerical range are equally applicable.

In the embodiments, the content of the inorganic particles A is not less than 85 wt%, and the specific surface area of the inorganic particles A is 2-10 $m^2$/g, which enables the base coating to have a suitable porosity and further ensures the homogeneity of the base coating.

In some embodiments, the inorganic particles A include at least one of $Al_2O_3$, $AlOOH$, and $SiO_2$.

In some embodiments, the non-binder polymer C has a particle size of 0.5-20 $\mu$m, D10 of 0.5-4.0 $\mu$m, D50 of 3.0-8.0 $\mu$m, D90 of 5.0-15 $\mu$m.

In the embodiments, the non-binder polymer C has a particle size of 0.5-20 $\mu$m, which may be, for example, 0.5 $\mu$m, 2 $\mu$m, 4 $\mu$m, 6 $\mu$m, 8 $\mu$m, 10 $\mu$m, 12 $\mu$m, 14 $\mu$m, 16 $\mu$m, 18 $\mu$m, 20 $\mu$m, but is not limited to the values listed, and other values in the numerical range that are not listed are also applicable; the non-binder polymer C has a D10 of 0.5:0.5 4.0 $\mu$m, which may be, for example, 0.5 $\mu$m, 1 $\mu$m, 2 $\mu$m, 3 $\mu$m, 4 $\mu$m, but is not limited to the values listed, and other values in the numerical range that are not listed are also applicable; the non-binder polymer C has a D50 of 3.0-8.0 $\mu$m, which may be, for example, 3.0 $\mu$m, 4.0 $\mu$m, 5.0 $\mu$m, 6.0 $\mu$m, 7.0 $\mu$m, 8.0 $\mu$m, but is not limited to the values listed, and other values in the numerical range that are not listed are also applicable; the non-binder polymer C has a D90 of 5.0-15 $\mu$m, which may be, for example, 5.0 $\mu$m, 6.0 $\mu$m, 7.0 $\mu$m, 8.0 $\mu$m, 9.0 $\mu$m, 10.0 $\mu$m, 11.0 $\mu$m, 12.0 $\mu$m, 13.0 $\mu$m, 14.0 $\mu$m, 15.0 $\mu$m, but is not limited to the values listed, and other values in the numerical range that are not listed are also applicable.

In the embodiments, the non-binder polymer C has a particle size of 0.5-20 $\mu$m, D10 of 0.5-4.0 $\mu$m, D50 of 3.0-8.0 $\mu$m, D90 of 5.0-15 $\mu$m. By limiting the concentration of the particle size of the non-binder polymer C, it is ensured that a sufficient number of raised structures of suitable size can be formed on the surface of the base coating, so as to strengthen the bonding strength between the diaphragm and the electrode.

A lithium-ion battery, including the composite diaphragm as above.

## DETAILED DESCRIPTION

In order to enable those skilled in the art to better understand the technical solutions in the present disclosure, the technical solutions of the present disclosure will be described clearly and completely in the following, and it is obvious that the described embodiments are only a part of the embodiments of the present disclosure and not all of the embodiments.

Embodiment 1

1. Preparation of composite diaphragm

S1. A base film is prepared using a thermally induced phase separation method, with the ratio (mass ratio) of the oil phase (paraffin oil) and solid phase (PE powder) controlled at 3:1, the extrusion amount at 300 kg/h, and the extrusion temperature at 200 °C; the stretching ratio should be controlled at 7.2×7.0 times, and the heat-setting temperature should be controlled at 135 °C. The PE (polyethylene) base film is prepared through an extrusion-cooling casting-stretching-extraction-heat setting process;

S2: The inorganic particle boehmite (specific surface area of 6 m$^2$/g), the binder of polymer polyacrylic acid, and the non-binder polymer of polymethyl methacrylate (D50 of 3 $\mu$m) are added to a mixing tank in a mass ratio of 85:5:10, and then the solvent of deionized water is added and stirred to disperse evenly. The stirring is under a stirring speed of 1200 rpm for 80 minutes to form a coating slurry;

S3: The prepared coating slurry is uniformly coated on both sides of the porous polyolefin PE base film by a sandwich extrusion coating method at a coating speed of 60 m/min. After coating, a composite diaphragm product is obtained by drying in an oven at a temperature of 65-70 °C. The moisture content of the composite diaphragm product after drying is ≤1000 ppm, and the thickness of the base coating is 2 $\mu$m.

2. Preparation of lithium-ion battery

(1) Preparation of negative electrode

The negative-electrode active material of graphite, the conductive agent of acetylene black, the thickener of CMC (carboxymethyl cellulose sodium), and the binder of SBR (styrene-butadiene latex) are mixed in a mass ratio of 96:1:1.6:1.4, and then the solvent of deionized water is added. The mixture is stirred in a vacuum mixer until the system is homogeneous, and a negative-electrode slurry is obtained.

The negative-electrode slurry is evenly coated on both surfaces of a copper foil as a negative-electrode current collector, and then the negative electrode is obtained after rolling and slitting.

(2) Preparation of the positive electrode

The positive-electrode active material of LiFePO$_4$, the conductive agent of acetylene black and the binder of PVDF (polyvinylidene fluoride) are mixed in a mass ratio of 96:2:2, and the solvent of NMP (N-methyl-2-pyrrolidone) is added. The mixture is stirred in a vacuum mixer until the system is homogeneous, and a positive-electrode slurry is obtained. The positive-electrode slurry is evenly coated on both surfaces of an aluminum foil as a positive-electrode current collector, dried at room temperature, transferred to an oven for further drying, and then cold pressed and cut to obtain the positive electrode.

(3) Preparation of electrolyte

EC (ethylene carbonate), DMC (dimethyl carbonate) and EMC (ethyl methyl carbonate) are mixed in a volume ratio of 37%:40%:23% to obtain an organic solvent. The fully dried lithium salt of hexafluorophosphate LiPF$_6$ is dissolved in the organic solvent to prepare the electrolyte with a lithium-ion concentration of 1.0 mol/L.

(4) Preparation of diaphragm

The composite diaphragm prepared in Embodiment 1 is used as the diaphragm.

(5) Preparation of lithium-ion battery

The positive electrode, diaphragm, and negative electrode are stacked in order, with the diaphragm between the positive electrode and the negative electrode to isolate the two, and then wound to obtain a bare cell; the bare cell is placed in an outer casing, dried, and then the electrolyte is injected; after vacuum packaging, standing, formation, and shaping, etc., the lithium-ion battery is obtained.

Embodiment 2

1. Preparation of composite diaphragm

This embodiment refers to the method for preparing the composite diaphragm in Embodiment 1, and the difference between this embodiment and Embodiment 1 is that the stretching ratio should be controlled to $7.8 \times 7.2$ times in the preparation process of the PE base film, and the heat-setting temperature should be controlled to 130 °C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that the composite diaphragm prepared in this embodiment is used to prepare the lithium-ion battery. Except for the above differences, the other materials and operations applied to prepare the lithium-ion battery in this embodiment are strictly consistent with those in Embodiment 1.

Embodiment 3

1. Preparation of composite diaphragm

This embodiment refers to the method for preparing the composite diaphragm in Embodiment 1, and the difference between this embodiment and Embodiment 1 is that the stretching ratio should be controlled to $7.4 \times 7.0$ times in the preparation process of the PE base film, and the heat-setting temperature should be controlled at 133 °C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 31%:45%:24% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Embodiment 4

1. Preparation of composite diaphragm

This embodiment refers to the method for preparing the composite diaphragm in Embodiment 1, and the difference between this embodiment and Embodiment 1 is that the stretching ratio should be controlled to $7.2 \times 7.0$ times in the preparation process of the PE base film, and the heat-setting temperature should be controlled at 135 °C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 36%:40%:24% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Embodiment 5

1. Preparation of composite diaphragm

This embodiment refers to the method for preparing the composite diaphragm in Embodiment 1, and the difference between this embodiment and Embodiment 1 is that the stretching ratio should be controlled to $7.8 \times 7.2$ times in the preparation process of the PE base film, and the heat-setting temperature should be controlled at $130\,°C$. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 46%:31%:23% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Embodiment 6

1. Preparation of composite diaphragm

This embodiment refers to the method for preparing the composite diaphragm in Embodiment 1, and the difference between this embodiment and Embodiment 1 is that the stretching ratio should be controlled to $7.9 \times 7.4$ times in the preparation process of the PE base film, and the heat-setting temperature should be controlled at $129°C$. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that the composite diaphragm prepared in this embodiment is used to prepare the lithium-ion battery. Except for the above differences, the other materials and operations applied to prepare the lithium-ion battery in this embodiment are strictly consistent with those in Embodiment 1.

Embodiment 7

1. Preparation of composite diaphragm

This embodiment refers to the method for preparing the composite diaphragm in Embodiment 1, and the difference between this embodiment and Embodiment 1 is that the stretching ratio should be controlled to $7.0 \times 6.9$ times in the preparation process of the PE base film, and the heat-setting temperature should be controlled at $137°C$. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 49%:31%:20% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Embodiment 8

1. Preparation of composite diaphragm

This embodiment refers to the method for preparing the composite diaphragm in Embodiment 1, and the difference between this embodiment and Embodiment 1 is that the stretching ratio should be controlled to $7.4 \times 7.0$ times in the preparation process of the PE base film, the heat-setting temperature should be controlled at 135 °C, the thickness of the base coating should be 0.7 $\mu$m, and the non-binder polymer is polymethyl methacrylate (D50 of 1.5 $\mu$m). Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 36%:40%:24% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Embodiment 9

1. Preparation of composite diaphragm

This embodiment refers to the method for preparing the composite diaphragm in Embodiment 1, and the difference between this embodiment and Embodiment 1 is that the stretching ratio should be controlled to $7.8 \times 7.2$ times in the preparation process of the PE base film, the heat-setting temperature should be controlled at 135 °C, the thickness of the base coating should be 3.5 $\mu$m, and the non-binder polymer is polymethyl methacrylate (D50 of 5 $\mu$m). Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 36%:40%:24% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Comparison Example 1

1. Preparation of composite diaphragm

This embodiment refers to the method for preparing the composite diaphragm in Embodiment 1, and the difference between this embodiment and Embodiment 1 is that the stretching ratio should be controlled to 7.2×7.0 times, in the preparation process of the PE base film, and the heat-setting temperature should be controlled to 135 °C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 13%:73%:14% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Comparison Example 2

1. Preparation of composite diaphragm

This embodiment refers to the method for preparing the composite diaphragm in Embodiment 1, and the difference between this embodiment and Embodiment 1 is that the stretching ratio should be controlled to 7.0×6.9 times in the preparation process of the PE base film, and the heat-setting temperature should be controlled at 137°C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 27%:49%:24% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Comparison Example 3

1. Preparation of composite diaphragm

This embodiment refers to the method for preparing the composite diaphragm in Embodiment 1, and the difference between this embodiment and Embodiment 1 is that the stretching ratio should be controlled to $7.8 \times 7.2$ times in the preparation process of the PE base film, and the heat-setting temperature should be controlled at 130 °C. Except for the above differences, the other materials and operations applied to prepare the composite diaphragm in this embodiment are strictly consistent with those in Embodiment 1.

2. Preparation of lithium-ion battery

The composite diaphragm prepared in this embodiment is used to prepare the lithium-ion battery in accordance with the method for preparing the lithium-ion battery in Embodiment 1. The difference from Embodiment 1 is that:

(1) Preparation of electrolyte

EC, DMC, and EMC are mixed in a volume ratio of 50%:31%: 19% to obtain an organic solvent. The fully dried lithium salt of hexafluorophosphate $LiPF_6$ is dissolved in the organic solvent to prepare the electrolyte with a lithium-ion concentration of 1.0 mol/L.

(2) The composite diaphragm prepared in this embodiment is used to prepare the lithium-ion battery.

Except for the above differences, the other materials and operations applied to prepare the lithium-ion battery in this embodiment are strictly consistent with those in Embodiment 1.

Test example

1. Ionic conductivity of electrolyte

The ionic conductivity of the electrolyte is calculated by reference to the test method for the ionic conductivity of electrolyte in section 4.7 of the industry standard SJT11723-2018.

2. Ionic conductivity of composite diaphragm

At 25°C, the ionic conductivity of the composite diaphragm is calculated by reference to the test method for ionic conductivity of diaphragms in section 6.6.2 of China national standard GB/T 36363-2018.

3. Porosity of composite diaphragm

At 25°C, the porosity of the composite diaphragm is calculated by reference to the test method for the porosity of diaphragms in section 6.5.5 of China national standard GB/T 36363-2018.

4. Specific surface area of inorganic particles

At 25°C, the specific surface area of inorganic particles is calculated by reference to the test method for BET in China national standard GB/T24533-2019.

The test results of the ionic conductivity of the electrolyte, the ionic conductivity of the composite diaphragm, the porosity of the composite diaphragm, and the specific surface area of the inorganic particles are shown in Table 1 below.

5. Calculation method for the tortuosity of the composite diaphragm

The tortuosity of the composite diaphragm $T = \sqrt{\sigma_1/\sigma_2 \times P}$, where $\sigma_1$ is the ionic conductivity of the electrolyte, $\sigma_2$ is the ionic conductivity of the composite diaphragm, and P is the porosity of the composite diaphragm.

Table 1

| Group | Ionic conductivity of electrolyte $\sigma_1$ (mS/cm) | Ionic conductivity of composite diaphragm $\sigma_2$ (mS/cm) | Porosity of composite diaphragm $P$ (%) | Tortuosity $T$ | Thickness of base coating ($\mu$m) |
|---|---|---|---|---|---|
| Embodiment 1 | 7.5 | 0.80 | 30 | 1.68 | 2 |
| Embodiment 2 | 7.5 | 2.60 | 60 | 1.32 | 2 |
| Embodiment 3 | 8.9 | 1.50 | 38 | 1.50 | 2 |
| Embodiment 4 | 7.7 | 0.80 | 30 | 1.70 | 2 |
| Embodiment 5 | 5.3 | 2.60 | 60 | 1.11 | 2 |
| Embodiment 6 | 7.5 | 2.90 | 67 | 1.32 | 2 |
| Embodiment 7 | 4.7 | 0.42 | 20 | 1.50 | 2 |
| Embodiment 8 | 7.7 | 0.85 | 30 | 1.65 | 0.7 |
| Embodiment 9 | 7.7 | 1.60 | 60 | 1.70 | 3.5 |
| Comparison Example 1 | 18.0 | 0.80 | 30 | 2.60 | 2 |
| Comparison Example 2 | 10.0 | 0.42 | 20 | 2.18 | 2 |
| Comparison Example 3 | 4.5 | 2.60 | 60 | 1.02 | 2 |

Performance test

1. Dynamic performance test (DCRtest)

Equipment: Newell charge-discharge machine

Test method:

1) In a constant temperature chamber at 25°C, the lithium-ion battery is discharged at 1C/1C until the end-of-discharge voltage specified in the technical file, and then left for no less than 10 minutes. Then the lithium-ion battery is charged at 1C/1C constant current until the end-of-charge voltage, and then switched to constant voltage charging. The charging is stopped when the end-of-charge current drops to 0.05C, and the battery is left for no less than 10 minutes after charging.
2) The battery is charged to 50% SOC, left for 2 hours, and an open circuit voltage V0 is recorded;
3) The battery is discharged at 1C/1C current ID for 18 seconds, with a sampling interval of 0.1 seconds, and a 18s voltage V18D is recorded;
4) The battery is left for 40 seconds, with a sampling interval of 0.1 seconds, and a voltage V1 is recorded;
5) The battery is charged at 1C/1C current Ic for 10 seconds, with a sampling interval of 0.1 seconds, and a 10s voltage V18D is recorded; the battery is left for 10 min;

Calculation formula: 18s discharge internal resistance (mQ) = (V0-V18D)/ID×1000.

2. Storage test

(1) At 25°C, set the voltage range to 2.5V-3.65V, charge and discharge the prepared battery at 1C rate, and perform a full charge-discharge cycle test for 5 cycles.
(2) Store at 25°C for 30d.
(3) At 25°C, set the voltage range to 2.5V-3.65V, charge and discharge the prepared battery at 1C, and perform a full charge and discharge cycle test for 5 cycles.

The storage capacity retention rate is calculated by the following formula:
Storage capacity retention rate = Q1/Q0 × 100%

3. Cycle performance test

At 25°C, set the voltage range to 2.5V-3.65V, charge and discharge the prepared battery at 1C rate, and perform a full charge-discharge cycle test for 1000 cycles; record an initial discharge capacity Q1, a secondary discharge capacity Q2, ..., and a final discharge capacity Q1000.
The cycle capacity retention rate is calculated by the following formula:
Cycle capacity retention rate of the i-th cycle = Qi/Q1 × 100%
The results of the DCR test, storage test, and cycle test are shown in Table 2 below.

Table 2

| Group | Ionic conductivity (mS/cm) | | Porosity of composite diaphragm P (%) | Tortuosity T | Thickness of base coating (μm) | DCR (mΩ) | Capacity retention rate (%) | |
|---|---|---|---|---|---|---|---|---|
| | Electrolyte $\sigma_1$ | Composite diaphragm $\sigma_2$ | | | | | Storage | Cycle/1000 cycles |
| Embodiment 1 | 7.5 | 0.80 | 30 | 1.68 | 2 | 0.42 | 95 | 89 |
| Embodiment 2 | 7.5 | 2.60 | 60 | 1.32 | 2 | 0.20 | 93 | 95 |
| Embodiment 3 | 8.9 | 1.50 | 38 | 1.50 | 2 | 0.25 | 94 | 94 |
| Embodiment 4 | 7.7 | 0.80 | 30 | 1.70 | 2 | 0.45 | 96 | 87 |
| Embodiment 5 | 5.3 | 2.60 | 60 | 1.11 | 2 | 0.29 | 93 | 93 |
| Embodiment 6 | 7.5 | 2.90 | 67 | 1.32 | 2 | 0.34 | 92 | 91 |
| Embodiment 7 | 4.7 | 0.42 | 20 | 1.50 | 2 | 0.38 | 94 | 90 |
| Embodiment 8 | 7.7 | 0.85 | 30 | 1.65 | 0.7 | 0.38 | 94 | 85 |
| Embodiment 9 | 7.7 | 1.60 | 60 | 1.70 | 3.5 | 0.56 | 96 | 85 |
| Comparison Example 1 | 18.0 | 0.80 | 30 | 2.60 | 2 | 0.82 | 95 | 76 |
| Comparison Example 2 | 10.0 | 0.42 | 20 | 2.18 | 2 | 0.88 | 95 | 71 |
| Comparison Example 3 | 4.5 | 2.60 | 60 | 1.02 | 2 | 0.79 | 92 | 77 |

The composite diaphragm produced in Embodiments 1 to 9 all belong to the $T = \sqrt{\sigma_1/\sigma_2 \times P}$ and T=1.1-1.7 products, and the lithium-ion batteries produced using these composite diaphragms all have good cycle performance, storage performance, and low DC resistance (DCR) values. The composite diaphragm prepared in Comparison Examples 1 to 3 are not products with T=1.1-1.7, and the lithium-ion batteries prepared using these composite diaphragms prepared in Comparison Examples 1 to 3 have poorer cycle performance and higher DC resistance (DCR) values than those prepared using the composite diaphragms prepared in Embodiments 1 to 9. This shows that the application of composite diaphragm with the characteristics of T=1.1-1.7 can make lithium-ion batteries have both excellent electrical conductivity and cycle characteristics.

The tortuosity T of the composite diaphragm refers to the ratio of the distance travelled by lithium ions in the composite diaphragm to the thickness of the diaphragm. The composite diaphragm prepared in Embodiments 1 to 9 all satisfy T=1.1 to 1.7, and thus the lithium-ion batteries using these composite diaphragms have good lithium-ion transport kinetics and good storage performance.

In the Embodiments 1 to 7, the cycle characteristics of Embodiments 2, 3, 5, 6, and 7 are better and the DCR values are lower, which shows that when the tortuosity T of the composite diaphragm satisfies the above-mentioned range of 1.1 to 1.5, the conductivity and cycle characteristics of the lithium-ion battery can be further improved. Although the tortuosity T of the composite diaphragms in Embodiments 5, 6 and 7 also falls within the above-mentioned preferred range, in particular, the tortuosity T of the composite diaphragms in Embodiments 5 and 6 is similar to that of Embodiment 2, and the tortuosity T of the composite diaphragm in Embodiment 7 is similar to that of Embodiment 3, however, by comparing the test results data, the data corresponding to Embodiment 2 is better than that of Embodiments 5 and 6, and the data corresponding to Embodiment 3 is better than that of Embodiment 7. The reason is that the value range of the ionic conductivity $\sigma_1$ of the electrolyte of the composite diaphragms in Embodiments 2 and 3 falls within the range of 7.5-17.0 mS/ cm, the value range of ionic conductivity $\sigma_2$ of the composite diaphragms falls within the range of 0.5-2.6 mS/cm, and the value range of porosity P of the composite diaphragms falls within the range of 30%-60%. Lithium-ion batteries using composite diaphragm with the above characteristics have good lithium-ion transport kinetics.

As can be seen from the performance test results of the lithium-ion batteries provided in Embodiments 1, 4, 8, and 9, Embodiment 1 has better cycle performance than Embodiment 8, and Embodiment 4 has better cycle performance and lower DCR than Embodiment 9. The base coating thicknesses of Embodiments 1 and 4 are in the range of 1.0 to 3.0 μm, which not only makes the composite diaphragm have good heat shrinkage resistance, but also ensures that the lithium-ion battery has a low DCR. The base coating thickness of the composite diaphragm in Embodiment 8 is too small, which reduces the heat shrinkage resistance of the composite diaphragm. On the other hand, the base coating thickness of the composite diaphragm in Embodiment 9 is too large, which increases the DCR value of the lithium-ion battery.

The above embodiments are only intended to illustrate the technical solutions of the present disclosure and are not to limit the scope of the present disclosure. Although the present disclosure is described in detail with reference to the embodiments, those skilled in the art should understand that the technical solutions of the present disclosure can be modified or replaced by equivalent means without departing from the substance and scope of the technical solutions of the present disclosure.

**Claims**

1. A composite diaphragm, **characterized by** comprising a porous substrate and a porous active layer; wherein the porous active layer is arranged on at least one surface of the porous substrate; the porous active layer comprises a base coating and a non-binder polymer C embedded in the base coating; the base coating comprises inorganic particles A and a binder polymer B;

   D50 of the non-binder polymer C is greater than a thickness of the base coating;

   a tortuosity of the composite diaphragm $T = \sqrt{\sigma_1/\sigma_2 \times P}$, where $\sigma_1$ is an ionic conductivity of an electrolyte, $\sigma_2$ is an ionic conductivity of the composite diaphragm, and P is a porosity of the composite diaphragm; the tortuosity T of the composite diaphragm is in a range of 1.1 to 1.7.

2. The composite diaphragm according to claim 1, wherein the tortuosity T of the composite diaphragm is in a range of 1.1 to 1.5.

3. The composite diaphragm according to claim 1, wherein the $\sigma_1$ is in a range of 7.5 to 17.0 mS/cm.

4. The composite diaphragm according to claim 1, wherein the $\sigma_2$ is in a range of 0.5 to 2.6 mS/cm.

5. The composite diaphragm according to claim 4, wherein the P is in a range of 30% to 60%.

6. The composite diaphragm according to claim 1, wherein the thickness of the base coating is in a range of 1.0 to 3.0 $\mu$m.

7. The composite diaphragm according to claim 1, wherein the inorganic particles A in the base coating comprise at least one of $SrTiO_3$, $SnO_2$, $CeO_2$, MgO, NiO, CaO, ZnO, $ZrO_2$, $Y_2O_3$, $Al_2O_3$, $TiO_2$, SiC, AlOOH, and $SiO_2$.

8. The composite diaphragm according to claim 7, wherein the inorganic particles A comprise at least one of $Al_2O_3$, AlOOH, and SiOz.

9. The composite diaphragm according to claim 1, wherein the non-binder polymer C has a particle size of 0.5-20 $\mu$m, D10 of 0.5-4.0 $\mu$m, D50 of 3.0-8.0 $\mu$m, D90 of 5.0-15 $\mu$m.

10. The composite diaphragm according to claim 1, wherein a content of the inorganic particles A in the base coating is not less than 85wt%, the inorganic particles A having a specific surface area of 2-10 $m^2$/g.

11. A lithium-ion battery, comprising the composite diaphragm according to any one of claims 1-10.

Europäisches
Patentamt
European
Patent Office
Office européen
des brevets

# EUROPEAN SEARCH REPORT

**Application Number**

EP 24 21 7038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/055724 A1 (TAN XIAOFANG [CN] ET AL) 15 February 2024 (2024-02-15) * paragraphs [0009] - [0085] * | 1-11 | INV. H01M10/0525 H01M10/0564 H01M50/411 |
| A | EP 3 754 751 A1 (SAMSUNG SDI CO LTD [KR]) 23 December 2020 (2020-12-23) * paragraphs [0011] - [0062] * | 1-11 | H01M50/417 H01M50/42 H01M50/434 H01M50/446 |
| A | US 2021/143511 A1 (ZHANG ZHENGMING [US] ET AL) 13 May 2021 (2021-05-13) * paragraphs [0029] - [0133] * | 1-11 | H01M50/449 H01M50/491 |
| A | CN 105 958 000 A (DONGGUAN RUBIK'S CUBE NEW ENERGY TECH CO LTD) 21 September 2016 (2016-09-21) * the whole document * | 1-11 | |
| A | CN 109 148 798 A (SUNWODA ELECTRONIC CO LTD) 4 January 2019 (2019-01-04) * the whole document * | 1-11 | |

TECHNICAL FIELDS
SEARCHED (IPC)

H01M

The present search report has been drawn up for all claims

| Place of search | Date of completion of the search | Examiner |
|---|---|---|
| Munich | 13 May 2025 | Kelly, Michael |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 21 7038

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| US 2024055724 A1 | 15-02-2024 | CN 113178663 A | 27-07-2021 |
| | | EP 4333187 A1 | 06-03-2024 |
| | | US 2024055724 A1 | 15-02-2024 |
| | | WO 2022227345 A1 | 03-11-2022 |
| EP 3754751 A1 | 23-12-2020 | CN 111712943 A | 25-09-2020 |
| | | EP 3754751 A1 | 23-12-2020 |
| | | KR 20190097531 A | 21-08-2019 |
| | | US 2020403205 A1 | 24-12-2020 |
| | | WO 2019156410 A1 | 15-08-2019 |
| US 2021143511 A1 | 13-05-2021 | CN 111615760 A | 01-09-2020 |
| | | EP 3743953 A1 | 02-12-2020 |
| | | JP 2021511637 A | 06-05-2021 |
| | | JP 2024099677 A | 25-07-2024 |
| | | KR 20200108474 A | 18-09-2020 |
| | | US 2021143511 A1 | 13-05-2021 |
| | | US 2024274976 A1 | 15-08-2024 |
| | | WO 2019143483 A1 | 25-07-2019 |
| CN 105958000 A | 21-09-2016 | NONE | |
| CN 109148798 A | 04-01-2019 | NONE | |

EPO FORM P0459

For more details about this annex : see Official Journal of the European Patent Office, No. 12/82